# FASCICULE DE BREVET EUROPEEN

(11) **EP 3 359 447 B1**
(45) Date de publication et mention de la délivrance du brevet: **05.06.2019**
(21) Numéro de dépôt: 16794687.0
(22) Date de dépôt: 07.10.2016
(51) Int. Cl.: B64D 41/00, F15B 15/19

(54) **DISPOSITIF D'ACTIONNEMENT POUR SYSTEME D'EOLIENNE DE SECOURS D'AERONEF**
BETÄTIGUNGSVORRICHTUNG FÜR EIN FLUGZEUG-NOTSTAULUFTTURBINENSYSTEM
ACTUATION DEVICE FOR AIRCRAFT EMERGENCY RAM AIR TURBINE SYSTEM

(30) Priorité: 09.10.2015 FR 1559629
(43) Date de publication de la demande: 15.08.2018
(73) Titulaire: Safran Electrical & Power, 31702 Blagnac Cedex (FR)
(72) Inventeur: POLIN, Eric, Joseph, Etienne, 31700 Blagnac (FR)
(74) Mandataire: Regimbeau
(86) Numéro de dépôt international: PCT/FR2016/052602
(87) Numéro de publication internationale: WO 2017/060653

(56) Documents cités:
- US-A1- 2012 006 938
- US-A1- 2015 096 437
- US-A1- 2015 232 195

## Description

### DOMAINE TECHNIQUE GENERAL

La présente invention concerne un dispositif d'actionnement pour un système d'éolienne de secours d'un aéronef, notamment d'un avion, comprenant un vérin.

### ETAT DE L'ART

Il est connu d'équiper les aéronefs, notamment les avions, d'une éolienne de secours (ou « Ram Air Turbine » en terminologie anglo-saxonne) qui est utilisée comme une source d'énergie électrique de secours en cas de perte des générateurs électriques principaux de l'aéronef. Cela se produit par exemple en cas de panne simultanée des moteurs de l'aéronef. En fonctionnement, l'éolienne de secours permet de produire l'énergie électrique nécessaire aux systèmes vitaux de l'aéronef, comme par exemple le système et les actionneurs de contrôle et de commande de vol.

Un système d'éolienne de secours d'aéronef connu de l'état de la technique est par exemple illustré à la figure 1 et dans le document US2015096437. Un tel système comprend de manière classique une éolienne de secours 1, une structure d'aéronef 5, une trappe 7, et un dispositif d'actionnement 9 comprenant un vérin.

L'éolienne de secours 1 comprend un mât 2, un générateur électrique 3 et une turbine 4, le générateur électrique 3 et la turbine 4 étant positionnés à une première extrémité 2a du mât 2. La turbine 4 est couplée au générateur électrique 3, de sorte que la rotation des pâles de la turbine 4 entraîne la production d'énergie électrique par le générateur électrique 3.

La deuxième extrémité 2b du mât 2 de l'éolienne de secours 1 est en outre relié à la structure d'aéronef 5 par l'intermédiaire du vérin 9 du dispositif d'actionnement.

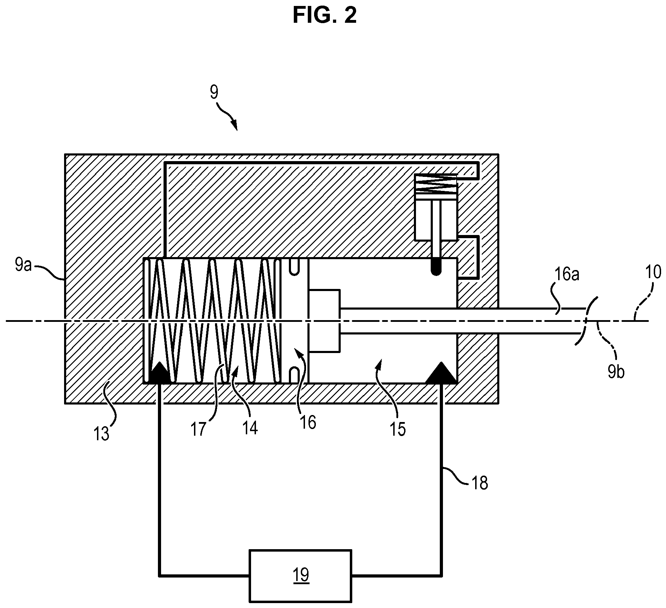

Le vérin 9 du dispositif d'actionnement est représenté plus en détail à la figure 2. Il s'étend selon un axe longitudinal 10 et comprend un cylindre 13 comprenant une première chambre 14 et une deuxième chambre 15, un piston 16 s'étendant à l'intérieur du cylindre 13 entre la première et la deuxième chambre 14, 15, le piston 16 étant muni d'une tige s'étendant en partie à l'extérieur du cylindre 13 et un ressort 17 positionné dans la première chambre 14. Le piston 16 se déplace par rapport au cylindre 13 sous l'effet du ressort 17 entre une position rétractée et une position déployée dans laquelle la longueur de la partie de la tige 16a s'étendant à l'extérieur du cylindre 13 est plus grande que dans la position rétractée.

L'extrémité 9a du cylindre 13 opposée à la partie de la tige 16a s'étendant à l'extérieur du cylindre 13 est reliée à la structure d'aéronef 5 et, lorsque le vérin 9 est en position rétractée, à un système d'accrochage 12. L'extrémité 9b de la tige 16a opposée au piston 16, autrement dit l'extrémité 9b de la tige 16a qui se trouve à l'extérieur du cylindre 13, est reliée au mât 2 de l'éolienne de secours 1 et à une bielle 11 d'ouverture de la trappe 7.

Lorsque le vérin 9 est dans la position rétractée, l'éolienne de secours 1 est logée à l'intérieur de l'aéronef. Le vérin 9 est maintenu en position rétractée par le système d'accrochage 12, la libération du vérin 9 par le système d'accrochage 12 entraînant l'actionnement du vérin 9. La libération du vérin 9 par le système d'accrochage 12 peut être commandée manuellement par le pilote ou automatiquement par le système embarqué de l'aéronef qui détecte par exemple la perte des générateurs électriques principaux entrainés par les moteurs de l'aéronef.

L'actionnement du vérin 9 entraîne le déplacement du piston 16 et de la tige 16a de la position rétractée vers la position déployée ce qui permet de déployer l'éolienne de secours 1 vers l'extérieur de l'aéronef et d'ouvrir simultanément la trappe 7 via la bielle 11. Lorsque le vérin 9 est dans la position déployée, la turbine 4 de l'éolienne de secours 1 se trouve à l'extérieur de l'aéronef de sorte qu'un flux d'air entraîne en rotation les pâles de la turbine 4 et que le générateur électrique 3 produise l'énergie électrique nécessaire à l'aéronef.

En position rétractée, le ressort 17 est précontraint. Ainsi, lorsque le système d'accrochage 12 libère le vérin 9, il libère également l'énergie potentielle du ressort 17 qui était stockée dans le vérin 9, entraînant le déplacement du piston 16 et de la tige 16a de la position rétractée à la position déployée et de ce fait le déploiement de l'éolienne de secours 1 et l'ouverture de la trappe 7.

Une quantité importante d'énergie potentielle doit donc être stockée dans le ressort 17 du vérin 9. Cette quantité d'énergie doit en effet être suffisante pour permettre à la fois le déploiement de l'éolienne de secours 1 et l'ouverture de trappe 7, et notamment pour supporter les efforts aérodynamiques qui s'appliquent sur l'éolienne de secours 1 et la trappe 7, lorsqu'elles sont soumises au flux d'air extérieur.

Par ailleurs, pour l'opération de repliement de l'éolienne de secours 1, un circuit hydraulique 18 reliant les première et deuxième chambre 13, 14 à une pompe hydraulique 19 est prévu. L'huile contenue dans la première chambre 14 est pompée de sorte que le piston 16 applique un effort sur le ressort 17 et que le vérin 9 retrouve la position rétractée.

Les efforts générés par le ressort 17 à l'état précontraint doivent donc nécessairement être pris en compte pour dimensionner un système d'éolienne de secours, notamment une éolienne de secours 1, un vérin 9 et un système d'accrochage 12, qui résiste à de tels efforts.

Or, au vu des efforts générés par le ressort 17 à l'état précontraint, cela conduit à une augmentation importante de la masse du système d'éolienne de secours, ce qui est contraire à la volonté des avionneurs de réduire la masse des aéronefs.

Il existe donc un besoin de proposer un système d'éolienne de secours de moindre masse.

### PRESENTATION DE L'INVENTION

La présente invention répond à ce besoin en proposant un dispositif d'actionnement pour un système d'éolienne de secours d'aéronef, comprenant un vérin et un générateur de gaz pour l'actionnement du vérin de sorte à limiter les efforts internes au vérin et appliqués par le vérin sur les autres composants du système et ainsi à réduire la masse du vérin et des autres composants du système.

Plus précisément, la présente invention a pour objet un dispositif d'actionnement pour un système comprenant une éolienne de secours, ledit dispositif comprenant un vérin s'étendant selon un axe longitudinal et comprenant :
- un cylindre configuré pour être relié à une structure d'aéronef ou à l'éolienne de secours,
- un piston s'étendant à l'intérieur du cylindre et définissant deux chambres dans celui-ci, le piston étant muni d'une tige s'étendant en partie à l'extérieur du cylindre, ladite partie s'étendant à l'extérieur du cylindre étant configurée pour être reliée à l'éolienne de secours ou à la structure d'aéronef, le piston étant configuré pour se déplacer par rapport au cylindre entre une position rétractée et une position déployée, dans laquelle la longueur de la partie de la tige s'étendant à l'extérieur du cylindre est plus grande que dans la position rétractée, l'une des chambres du cylindre étant munie d'au moins un générateur de gaz configuré pour, le piston étant en position rétractée, libérer des gaz dans ladite chambre, de sorte que le piston se déplace dans le cylindre de la position rétractée vers la position déployée sous l'effet d'une différence de pression entre les deux chambres du cylindre.

Un tel dispositif d'actionnement a pour avantage de mettre en oeuvre un générateur de gaz pour l'actionnement du vérin, ce qui permet de limiter les efforts internes audit vérin, notamment en position rétractée, et ainsi de réduire sa masse.

Préférentiellement, le générateur de gaz est un générateur pyrotechnique ou un générateur hydride.

Préférentiellement, le générateur de gaz est relié à un circuit électrique configuré pour fournir au générateur de gaz l'énergie électrique nécessaire à la libération des gaz dans la chambre du cylindre dans laquelle il est situé, le circuit électrique étant pourvu d'un système de détection configuré pour détecter une panne du circuit électrique.

Préférentiellement, la deuxième chambre est pourvue d'un élément configuré pour amortir le piston, lorsque le générateur de gaz libère les gaz dans la chambre du cylindre dans laquelle il est situé et que le piston se déplace de la position rétractée à la position déployée.

Plus préférentiellement, la deuxième chambre est reliée à un conduit d'évacuation configuré pour évacuer le fluide contenu dans la deuxième chambre, le conduit d'évacuation étant pourvu d'un restricteur configuré pour laminer le fluide s'évacuant de la deuxième chambre et ainsi amortir le piston, lorsque le générateur de gaz libère les gaz dans la chambre du cylindre dans laquelle il est situé.

En variante, un élément élastique est placé dans la deuxième chambre, contre le fond du cylindre, de sorte que lorsque le piston et la tige se déplacent de la position rétractée à la position déployée, le piston vient comprimer l'élément élastique contre le fond du cylindre, amortissant de ce fait le piston.

Préférentiellement, le cylindre comprend en outre un orifice d'évacuation configuré pour évacuer les gaz libérés par le générateur de gaz dans la chambre du cylindre dans laquelle il est situé, lorsque le piston et la tige sont en position déployée.

Plus préférentiellement, l'orifice d'évacuation est agencé dans le cylindre de sorte à être obstrué par le piston ou à déboucher dans la deuxième chambre, lorsque le piston est en position rétractée, et à déboucher dans la chambre du cylindre dans laquelle le générateur de gaz est situé, lorsque le piston est en position déployée.

La présente invention a également pour objet un système comprenant :
- une éolienne de secours d'aéronef comprenant un mât à une première extrémité duquel une turbine s'étend, ladite turbine étant couplée à un générateur électrique,
- un dispositif d'actionnement tel que précédemment décrit, comprenant un vérin s'étendant selon un axe longitudinal et comprenant :
- un cylindre relié à une structure d'aéronef ou à l'éolienne de secours,
- un piston s'étendant à l'intérieur du cylindre et définissant deux chambres dans celui-ci, le piston étant muni d'une tige s'étendant en partie à l'extérieur du cylindre, ladite partie s'étendant à l'extérieur du cylindre étant reliée à l'éolienne de secours ou à la structure d'aéronef, le piston étant configuré pour se déplacer par rapport au cylindre entre une position rétractée et une position déployée, dans laquelle la longueur de la partie de la tige s'étendant à l'extérieur du cylindre est plus grande que dans la position rétractée, l'une des chambres du cylindre étant munie d'au moins un générateur de gaz configuré pour, lorsque le piston est en position rétractée, libérer des gaz dans ladite chambre, de sorte que le piston se déplace dans le cylindre de la position rétractée vers la position déployée sous l'effet d'une différence de pression entre les deux chambres du cylindre.

Un tel système présente l'avantage de mettre en oeuvre un générateur de gaz pour l'actionnement du vérin et donc le déploiement de l'éolienne de secours, ce qui permet de limiter les efforts internes au vérin ainsi que les efforts appliqués par ce dernier sur l'éolienne de secours et la structure d'aéronef, notamment en position rétractée, et ainsi de réduire la masse du système.

### PRESENTATION DES FIGURES

D'autres caractéristiques, buts et avantages de la présente invention apparaitront à la lecture de la description détaillée qui va suivre, et en regard des dessins annexés donnés à titre d'exemples non limitatif et sur lesquels :

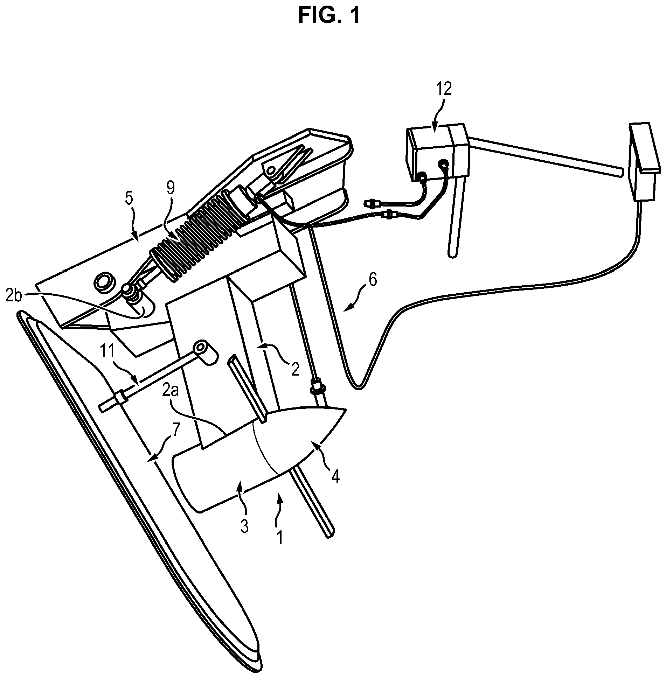

- la figure 1 (déjà décrite) est une vue en perspective d'un système d'éolienne de secours d'aéronef selon l'état de la technique ;
- la figure 2 (déjà décrite) est une vue schématique, en coupe, d'un vérin d'actionnement du système illustré à la figure 1 ;
- la figure 3 est une vue en perspective d'un système d'éolienne de secours d'aéronef selon un mode de réalisation de l'invention ;
- la figure 4 est une vue schématique, en coupe, d'un vérin d'actionnement du système illustré à la figure 3,
- les figures 5a et 5b sont des vues schématiques, en coupe, d'une variante du vérin d'actionnement illustré à la figure 4.

### DESCRIPTION DETAILLEE

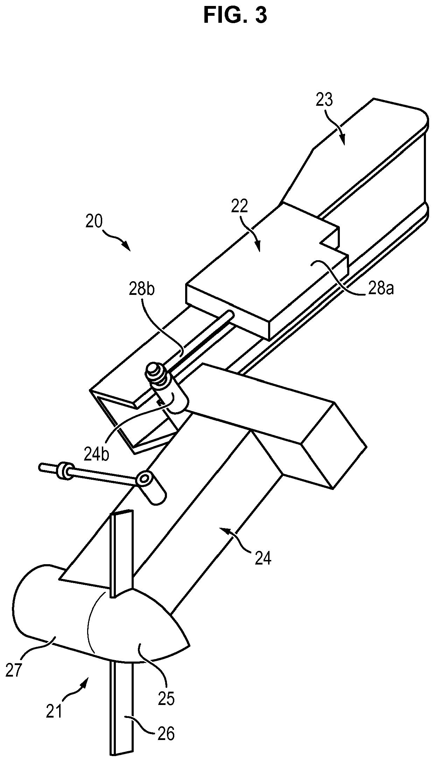

La figure 3 montre un système d'éolienne de secours 20 d'un aéronef, notamment d'un avion. Le système 20 est par exemple positionné au niveau du ventre mou de l'avion, de la pointe avant de l'avion, ou au niveau de l'aile de l'avion.

Le système d'éolienne de secours 20 comprend une éolienne de secours 21 (aussi appelée « Ram Air Turbine » ou « RAT » en terminologie anglo-saxonne), un dispositif d'actionnement de l'éolienne de secours 21 comprenant un vérin 22 et une structure d'aéronef 23. Le système 20 comprend également une trappe (non représentée) ménagée dans le fuselage de l'avion par laquelle l'éolienne de secours 21 est déployée à l'extérieur de l'aéronef. On comprendra qu'en fonction de la position du système d'éolienne de secours 20 sur l'aéronef, la structure d'aéronef 23 concernée est différente.

L'éolienne de secours 21 comprend un mât 24 à une première extrémité 24a duquel est positionnée une turbine 25 munie de pâles 26. La turbine 25 est couplée à un générateur électrique 27, de sorte que la rotation des pâles 26 de la turbine 25 entraîne la production d'énergie électrique par le générateur électrique 27. Le générateur électrique 27 est par exemple interposé entre la première extrémité 24a du mât 24 et la turbine 25.

La deuxième extrémité 24b du mât 24 est reliée à la structure d'aéronef 23 par l'intermédiaire du dispositif d'actionnement 22.

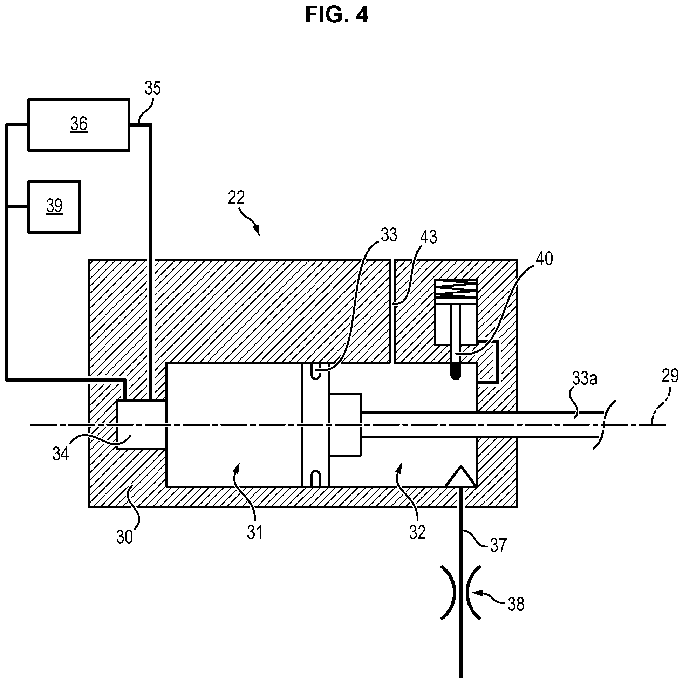

La figure 4 montre plus en détail le vérin 22 du dispositif d'actionnement.

Le vérin 22 s'étend selon un axe longitudinal 29 et est relié par une première extrémité 28a à la structure d'aéronef 23 et par une deuxième extrémité 28b au mât 24 de l'éolienne de secours 21. Le vérin 22 comprend :
- un cylindre 30 relié à la structure d'aéronef 23 et comprenant une première chambre 31 et une deuxième chambre 32, et
- un piston 33 s'étendant à l'intérieur du cylindre 30 entre la première et la deuxième chambre 31, 32, le piston 33 étant muni d'une tige 33a s'étendant en partie à l'extérieur du cylindre 30, ladite partie s'étendant à l'extérieur du cylindre 30 étant reliée à l'éolienne de secours 21, le piston 33 étant en outre configuré pour se déplacer par rapport au cylindre 30 entre une position rétractée et une position déployée dans laquelle la longueur de la partie de la tige 33a s'étendant à l'extérieur du cylindre 30 est plus grande que dans la position rétractée. La partie de la tige 33a s'étendant à l'extérieur du cylindre 30 est également reliée à la trappe via une bielle (non représentée).

Lorsque le vérin 22 est dans la position rétractée, l'éolienne de secours 21 est logée à l'intérieur de l'aéronef. Le vérin 22 est actionné dans sa position rétractée. L'actionnement du vérin 22 entraîne le déplacement du piston 33 et de la tige 33a de la position rétractée vers la position déployée et de ce fait le déploiement de l'éolienne de secours 21 vers l'extérieur de l'aéronef. Simultanément, le déplacement du piston 33 et de la tige 33a entraîne l'ouverture de la trappe via la bielle afin de permettre à l'éolienne de secours 21 de se déployer à l'extérieur. Lorsque le vérin 22 est dans la position déployée, la trappe est ouverte et la turbine 25 de l'éolienne de secours 21 se trouve à l'extérieur de l'aéronef de sorte qu'un flux d'air entraîne en rotation les pâles 26 de la turbine 25 et que le générateur électrique 27 produise l'énergie électrique nécessaire à l'aéronef.

La première chambre 31 du cylindre 30 est en outre munie d'au moins un générateur de gaz 34 configuré pour libérer des gaz dans la première chambre 31 du cylindre 30, lorsque le vérin 22 est actionné dans la position rétractée, de sorte que le piston 33 se déplace dans le cylindre 30 de la position rétractée vers la position déployée sous l'effet d'une différence de pression entre la première et la deuxième chambre 31, 32.

Ainsi, aucune énergie potentielle n'est stockée dans le vérin 22 en position rétractée, et aucun effort généré par cette énergie potentielle n'est appliqué sur l'éolienne de secours 21 et la structure d'aéronef 23 dans cette position, de sorte que le système d'éolienne de secours 20 peut être dimensionné en réduisant sa masse.

Par ailleurs, la maintenance du système d'éolienne de secours 20 est simplifiée dans la mesure où seul le rechargement du générateur de gaz 34 est nécessaire pour réactiver le système.

En outre, l'opération de repliement de l'éolienne de secours 21 à l'intérieur de l'aéronef est simplifiée. En effet, il n'est plus nécessaire de pré-contraindre de ressort, ni de prévoir un système de pompage hydraulique pour replier l'éolienne de secours 21. Il devient possible de procéder à un repliement manuel de l'éolienne de secours 21.

Le générateur de gaz 34 est par exemple un générateur pyrotechnique de gaz. Un tel générateur pyrotechnique présente généralement la forme d'une cartouche dans laquelle est ménagée une chambre de combustion accueillant une charge pyrotechnique et un allumeur actionné par transmission d'énergie électrique et configuré pour initier la combustion de la charge pyrotechnique. La combustion de charge pyrotechnique entraîne la libération des gaz qui viennent alimenter la première chambre 31 du cylindre 30. Le vérin 22 est donc actionné par la combustion de la charge pyrotechnique. Pour le rechargement du générateur de gaz 34, seule la cartouche du générateur de gaz 34 nécessite d'être remplacée.

Selon une première variante, le générateur de gaz 34 est un générateur hybride. Un tel générateur hybride se différencie du générateur pyrotechnique décrit ci-dessus en ce qu'il associe à la charge pyrotechnique des gaz inertes stockés dans un réservoir indépendant de la cartouche.

Selon une deuxième variante, le générateur de gaz 34 est une cartouche de gaz sous pression, c'est-à-dire que les gaz sont comprimés dans la cartouche à une pression supérieure à la pression atmosphérique. Dans cette variante, le générateur de gaz 34 comprend en outre une vanne agencée entre la cartouche de gaz et la première chambre 31, de sorte que lorsque la vanne est ouverte, la cartouche libère les gaz qu'elle contient dans la première chambre 31, entraînant ainsi l'actionnement du vérin 22.

De tels générateurs de gaz sont connus pour leur utilisation dans les systèmes d'airbag de véhicule ou de toboggan d'évacuation. Toutefois, dans ces systèmes, les générateurs de gaz sont utilisés pour gonfler le coussin d'airbag ou le toboggan qui sont formés d'une enveloppe souple afin d'en augmenter le volume. Au contraire, selon l'invention, le générateur de gaz 34 est associé à un cylindre 30 dont les parois sont rigides et donc dont le volume ne peut pas varier lors de la libération des gaz par le générateur de gaz 34. Les contraintes structurelles à prendre en compte pour l'utilisation du générateur de gaz 34 dans le vérin 22 n'ont donc rien à voir avec celles à prendre en compte pour l'utilisation de générateurs de gaz dans un système d'airbag ou de toboggan d'évacuation. Par ailleurs, que ce soit dans son application pour airbag ou pour toboggan d'évacuation, il est indispensable que le générateur de gaz délivre une importante quantité de gaz en un temps le plus court possible. Au contraire, selon l'invention, il est indispensable de contrôler et de limiter la vitesse de libération des gaz dans la première chambre 31 afin d'obtenir un déplacement du piston 33 et de la tige 33a et donc un déploiement de l'éolienne de secours 21 contrôlés, sans risque d'endommagements du vérin 22, de l'éolienne de secours 21, et de l'aéronef. Encore ici, les contraintes techniques à prendre en compte pour l'utilisation du générateur de gaz 34 dans le vérin 22 sont différents de celles à prendre en compte pour l'utilisation de générateurs de gaz dans un système d'airbag ou de toboggan d'évacuation.

Le générateur de gaz 34 est en outre relié à un circuit électrique 35 configuré pour actionner la libération des gaz dans la première chambre 31 du cylindre 30. Le circuit électrique 35 permet d'alimenter en énergie électrique le générateur de gaz 34 en prélevant cette énergie de batteries 36 stockées dans l'aéronef. En particulier, de manière transitoire, de telles batteries 36 sont utilisées pour apporter l'énergie électrique nécessaire à l'aéronef le temps que l'éolienne de secours 21 soit déployée.

Lorsque le générateur de gaz 34 est un générateur pyrotechnique ou hybride, le circuit électrique 35 permet de fournir l'énergie électrique nécessaire à la combustion de la charge pyrotechnique et donc à l'actionnement du vérin 22.

Lorsque le générateur de gaz 34 est une cartouche de gaz sous pression, le circuit électrique 35 permet par exemple d'actionner l'ouverture de la vanne de sorte à libérer les gaz dans la première chambre 31 du cylindre 30. En variante, la vanne peut être actionnée au moyen d'un générateur de gaz pyrotechnique configuré pour libérer la quantité de gaz nécessaire à l'ouverture de ladite vanne. Dans ce cas, l'actionnement de la vanne est donc pneumatique. Le générateur de gaz pyrotechnique est par exemple lui-même actionné par le circuit électrique 35.

Le circuit électrique 35 peut en outre être muni d'un système de détection 39 configuré pour détecter une panne du circuit électrique 35. Cela présente l'avantage d'améliorer la fiabilité du système d'éolienne de secours 20. Le système de détection 39 est par exemple configuré pour, à intervalles de temps régulier, envoyer un signal analogique en entrée du circuit électrique 35, pour mesurer ledit signal analogique en aval de l'entrée du circuit électrique 35, et pour comparer le signal analogique envoyé et le signal analogique mesuré. Le signal analogique est par exemple une tension électrique dans le circuit électrique 35. De cette manière, il est possible de vérifier que le signal analogique envoyé en entrée du circuit électrique 35 se retrouve bien en aval dans le circuit électrique 35 et donc que le circuit électrique 35 n'est pas ouvert. On s'assure ainsi qu'il n'y a pas de pannes cachées dans le circuit électrique 35 qui empêcherait l'initiation de la combustion de la charge pyrotechnique du générateur de gaz 34 au moment voulu.

Dans l'exemple illustré à la figure 4, le vérin 22 est en outre pourvu d'un conduit d'évacuation 37 configuré pour évacuer du fluide contenu dans la deuxième chambre 32, le conduit d'évacuation 37 étant en outre configuré pour amortir le piston 33, lorsque le générateur de gaz 34 libère les gaz dans la première chambre 31 du cylindre 30. Pour cela, le conduit d'évacuation 37 est par exemple muni d'un restricteur 38 configuré pour laminer le fluide en sortie de la deuxième chambre 32 et ainsi amortir le piston 33, lorsque le générateur de gaz 34 libère les gaz dans la première chambre 31 du cylindre 30. Le laminage du fluide permet en effet d'introduire des pertes de charge supplémentaires dans le conduit d'évacuation 37, qui viennent limiter l'augmentation de la pression dans la deuxième chambre 32 du cylindre 30, lorsque le piston 33 est déplacé vers la position déployée sous l'action des gaz libérés par le générateur de gaz 34. Le laminage du fluide permet donc de contrôler l'augmentation de la pression dans la deuxième chambre 32 du cylindre 30 et ainsi d'assurer l'amortissement du piston 33.

Le conduit d'évacuation 37 est par exemple configuré pour évacuer l'huile contenue dans la deuxième chambre 32. Dans ce cas, le conduit d'évacuation 37 communique avec une chambre hydraulique (non représentée). En variante, le conduit d'évacuation 37 est configuré pour évacuer l'air contenu dans la deuxième chambre 32 vers une zone de l'aéronef globalement à pression atmosphérique ou vers l'extérieur de l'aéronef.

Le conduit d'évacuation 37 et le restricteur 38 permettent d'ajuster le temps de déplacement du piston 33 et de la tige 33a de la position rétractée à la position déployée, et ainsi d'éviter que le piston 33 arrive en butée avec une vitesse trop rapide contre le cylindre 30 (ou l'ergot 40) provoquant son endommagement.

L'utilisation de générateurs de gaz 34 pyrotechniques ou hybrides contribue également au contrôle de la vitesse de déplacement du piston 33 et de la tige 33a. En effet, plus les efforts appliqués sur le piston 33 via la tige 33a, à savoir les efforts aérodynamiques appliqués par l'air extérieur et les efforts appliqués par l'éolienne de secours 21 et par la trappe via la bielle, sont importants, plus la pression dans la première chambre 31 est importante et plus rapide est la combustion de la charge pyrotechnique et donc la libération des gaz dans la première chambre 31. La vitesse du piston 33 et de la tige 33a est donc élevée lorsque le déploiement de l'éolienne 21 s'initie. Au contraire, moins les efforts appliqués sur le piston 33 via la tige 33a sont importants, ce qui peut être le cas lorsque le déploiement de l'éolienne de secours 21 est presque achevé, moins la pression dans la première chambre 31 est importante et plus lente est la combustion de la charge pyrotechnique. La chute de pression due au laminage du fluide qui s'évacue de la deuxième chambre 32 devient alors prédominante, assurant ainsi l'amortissement du piston 33 et de la tige 33a.

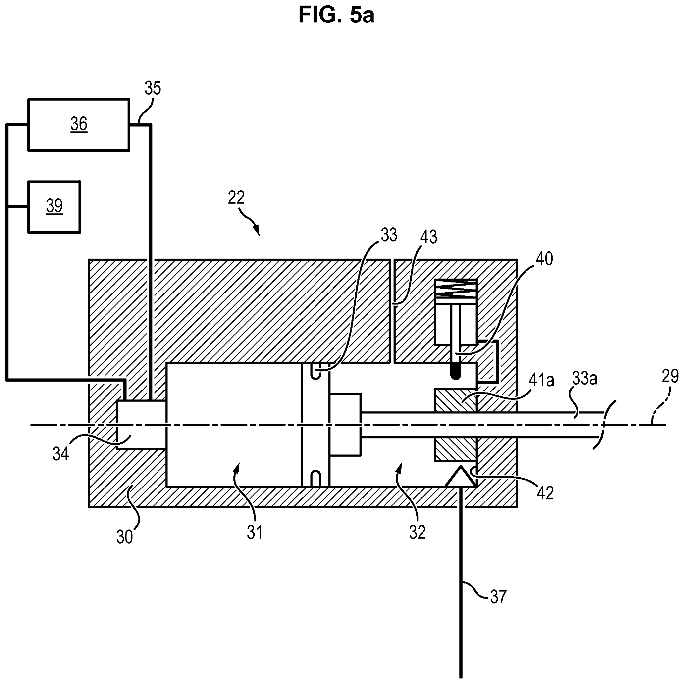

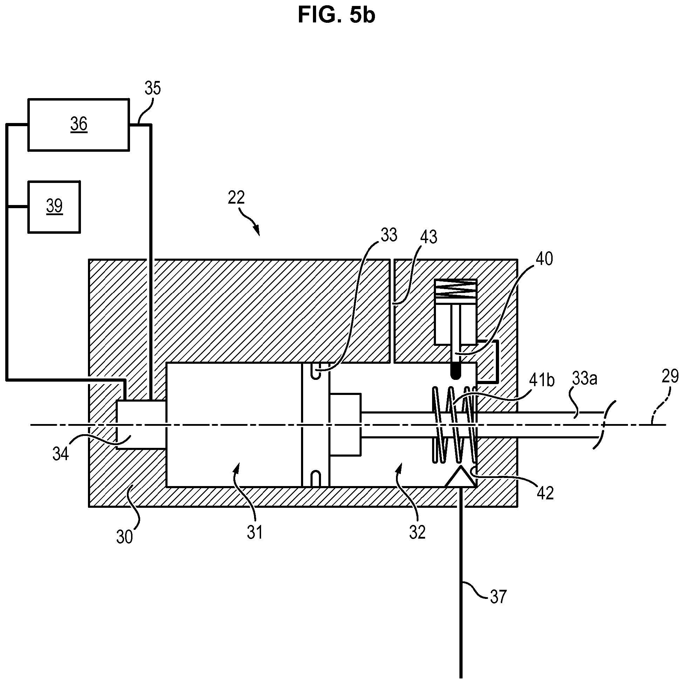

Dans une variante illustrée aux figures 5a et 5b, le piston 33 est amorti par l'intermédiaire d'un élément élastique 41 placé dans la deuxième chambre 32 du cylindre 30, contre le fond 42 du cylindre 30, de sorte que lorsque le piston 33 et la tige 33a se déplacent de la position rétractée à la position déployée, le piston 33 vient comprimer l'élément élastique contre le fond 42 du cylindre 30. Lorsque le piston 33 et la tige 33a sont en positon rétractée, l'élément élastique est à l'état non contraint. Lorsque le piston 33 et la tige 33a sont en position déployée, l'élément élastique est à l'état comprimé. L'élément élastique 41 est par exemple un cylindre d'élastomère 41a fixé au fond 42 du cylindre 30 et pourvu d'une ouverture axiale à travers laquelle s'étend la tige 33a (figure 5a). En variante, l'élément élastique 41 est un ressort 41b (figure 5b).

Plusieurs générateurs de gaz 34 indépendants entre eux peuvent être prévus pour libérer des gaz dans la première chambre 31 du cylindre 30. Lorsque le vérin 22 comprend plusieurs générateurs de gaz 34, ces derniers peuvent être montés en parallèle dans le circuit électrique 35 afin de commander indépendamment leur alimentation électrique.

Cela a pour avantage de s'assurer qu'en cas de dysfonctionnement d'un générateur de gaz 34, un n-ième générateur de gaz 34 peut être utilisé en remplacement. La fiabilité du système d'éolienne de secours 20 s'en trouve améliorée.

Dans l'exemple illustré à la figure 4, le cylindre 30 comprend en outre un orifice d'évacuation 43 configuré pour évacuer les gaz libérés par le générateur de gaz 34 dans la première chambre 31, lorsque le piston 33 et la tige 33a sont en position déployée. Pour cela, l'orifice 43 est agencé dans la paroi du cylindre 30 de sorte à être obstrué par le piston 33 ou à déboucher dans la deuxième chambre 32, lorsque le piston 33 est en position rétractée, et à déboucher dans la première chambre 31, lorsque le piston 33 est en position déployée. De cette manière, en position déployée, la pression dans la première chambre 31 est relâchée, de sorte que l'effort appliqué par les gaz sur le piston 33 ne soit pas maintenu dans cette position. Ainsi, lors du dimensionnement du système d'éolienne de secours 20, la masse de ce dernier peut également être diminuée en prenant compte de ce relâchement d'effort en position déployée. L'orifice d'évacuation 43 est de plus petites dimensions que le conduit d'évacuation 37, de sorte à éviter que le fluide contenu dans la deuxième chambre 32 du cylindre 30 ne passe de manière préférentielle dans l'orifice d'évacuation 43 et non plus dans le conduit d'évacuation 37.

Le système d'éolienne de secours 20 précédemment décrit présente l'avantage d'utiliser un générateur de gaz 34 pour l'actionnement du vérin 22 et donc le déploiement de l'éolienne de secours 21, ce qui limite les efforts interne audit vérin 22 et générés par le vérin 22 sur l'éolienne de secours 21 et la structure d'aéronef 23, notamment en position rétractée.

## Revendications

1. Dispositif d'actionnement pour un système (20) comprenant une éolienne de secours (21), ledit dispositif comprenant un vérin s'étendant selon un axe longitudinal (29) et comprenant :
- un cylindre (30) configuré pour être relié à une structure d'aéronef (23) ou à l'éolienne de secours (21),
- un piston (33) s'étendant à l'intérieur du cylindre (30) et définissant deux chambres (31, 32) dans celui-ci, le piston (33) étant muni d'une tige (33a) s'étendant en partie à l'extérieur du cylindre (30), ladite partie s'étendant à l'extérieur du cylindre (30) étant configurée pour être reliée à l'éolienne de secours (21) ou à la structure d'aéronef (23), le piston (33) étant configuré pour se déplacer par rapport au cylindre (30) entre une position rétractée et une position déployée, dans laquelle la longueur de la partie (33b) de la tige (33a) s'étendant à l'extérieur du cylindre (30) est plus grande que dans la position rétractée,
ledit dispositif d'actionnement étant **caractérisé en ce que** l'une (31) des chambres du cylindre (30) est munie d'au moins un générateur de gaz (34) configuré pour, le piston (33) étant en position rétractée, libérer des gaz dans ladite chambre (31), de sorte que le piston (33) se déplace dans le cylindre (30) de la position rétractée vers la position déployée sous l'effet d'une différence de pression entre les deux chambres (31, 32) du cylindre (30).

2. Dispositif d'actionnement selon la revendication 1, dans lequel le générateur de gaz (34) est un générateur pyrotechnique ou un générateur hydride.

3. Dispositif d'actionnement selon la revendication 2, dans lequel le générateur de gaz (34) est relié à un circuit électrique (35) configuré pour fournir au générateur de gaz (34) l'énergie électrique nécessaire à la libération des gaz dans la chambre (31) du cylindre (30) dans laquelle il est situé, le circuit électrique étant pourvu d'un système de détection (39) configuré pour détecter une panne du circuit électrique (35).

4. Dispositif d'actionnement selon l'une quelconque des revendications 1 à 3, dans lequel la deuxième chambre (32) est pourvue d'un élément configuré pour amortir le piston (33), lorsque le générateur de gaz (34) libère les gaz dans la chambre (31) du cylindre (30) dans laquelle il est situé et que le piston (33) se déplace de la position rétractée à la position déployée.

5. Dispositif d'actionnement selon la revendication 4, dans lequel la deuxième chambre (32) est reliée à un conduit d'évacuation (37) configuré pour évacuer le fluide contenu dans la deuxième chambre (32), le conduit d'évacuation (37) étant pourvu d'un restricteur (38) configuré pour laminer le fluide s'évacuant de la deuxième chambre (32) et ainsi amortir le piston (33), lorsque le générateur de gaz (34) libère les gaz dans la chambre (31) du cylindre (30) dans laquelle il est situé.

6. Dispositif d'actionnement selon la revendication 4, dans lequel un élément élastique (41) est placé dans la deuxième chambre (32), contre le fond (42) du cylindre (30), de sorte que lorsque le piston (33) et la tige (33a) se déplacent de la position rétractée à la position déployée, le piston (33) vient comprimer l'élément élastique contre le fond (42) du cylindre (30).

7. Dispositif d'actionnement selon l'une quelconque des revendications 1 à 6, dans lequel le cylindre (30) comprend en outre un orifice d'évacuation (43) configuré pour évacuer les gaz libérés par le générateur de gaz (34) dans la chambre (31) du cylindre (30) dans laquelle il est situé, lorsque le piston (33) et la tige (33a) sont en position déployée.

8. Dispositif d'actionnement selon la revendication 7, dans lequel l'orifice d'évacuation (43) est agencé dans le cylindre (30) de sorte à être obstrué par le piston (33) ou à déboucher dans la deuxième chambre (32), lorsque le piston (33) est en position rétractée, et à déboucher dans la chambre (31) du cylindre (30) dans laquelle le générateur de gaz (34) est situé, lorsque le piston (33) est en position déployée.

9. Système (20) comprenant une éolienne de secours (21) comprenant un mât (24) à une première extrémité (24a) duquel une turbine (25) s'étend, ladite turbine (25) étant couplée à un générateur électrique (27),
le système (20) étant **caractérisé en ce qu'**il comprend en outre un dispositif d'actionnement selon l'une des revendications 1 à 8.

## Patentansprüche

1. Betätigungsvorrichtung für ein System (20), umfassend ein Not-Windrad (21), wobei die Vorrichtung einen Antrieb umfasst, der sich gemäß einer Längsachse (29) erstreckt und umfasst:
- einen Zylinder (30), der konfiguriert ist, um mit einer Luftfahrzeugstruktur (23) oder mit dem Not-Windrad (21) verbunden zu sein,
- einen Kolben (33), der sich im Inneren des Zylinders (30) erstreckt und zwei Kammern (31, 32) in diesem definiert, wobei der Kolben (33) mit einer Stange (33a) ausgestattet ist, die sich teilweise außerhalb des Zylinders (30) erstreckt, wobei der Teil, der sich außerhalb des Zylinders (30) erstreckt, konfiguriert ist, um mit dem Not-Windrad (21) oder mit der Luftfahrzeugstruktur (23) verbunden zu sein, wobei der Kolben (33) konfiguriert ist, um sich in Bezug auf den Zylinder (30) zwischen einer eingezogenen Position und einer ausgefahrenen Position zu verlagern, in welcher die Länge des Teils (33b) der Stange (33a), die sich außerhalb des Zylinders (30) erstreckt, größer ist als in der eingezogenen Position,
wobei die Betätigungsvorrichtung **dadurch gekennzeichnet ist, dass** eine (31) der Kammern des Zylinders (30) mit mindestens einem Gaserzeuger (34) ausgestattet ist, der konfiguriert ist, um, wobei der Kolben (33) in eingezogener Position ist, Gase in die Kammer (31) freizusetzen, so dass sich der Kolben (33) in dem Zylinder (30) von der eingezogenen Position in die ausgefahrene Position unter der Wirkung einer Druckdifferenz zwischen den zwei Kammern (31, 32) des Zylinders (30) verlagert.

2. Betätigungsvorrichtung nach Anspruch 1, wobei der Gaserzeuger (34) ein pyrotechnischer Erzeuger oder ein Hydriderzeuger ist.

3. Betätigungsvorrichtung nach Anspruch 2, wobei der Gaserzeuger (34) mit einem Stromkreis (35) verbunden ist, der konfiguriert ist, um dem Gaserzeuger (34) die elektrische Energie bereitzustellen, die für die Freisetzung der Gase in die Kammer (31) des Zylinders (30) notwendig ist, in welcher er sich befindet, wobei der Stromkreis mit einem Detektionssystem (39) versehen ist, das konfiguriert ist, um eine Panne des Stromkreises (35) zu ermitteln.

4. Betätigungsvorrichtung nach einem der Ansprüche 1 bis 3, wobei die zweite Kammer (32) mit einem Element versehen ist, das konfiguriert ist, um den Kolben (33) zu dämpfen, wenn der Gaserzeuger (34) die Gase in die Kammer (31) des Zylinders (30) freisetzt, in welcher er sich befindet, und wenn sich der Kolben (33) aus der eingezogenen Position in die ausgefahrene Position verlagert.

5. Betätigungsvorrichtung nach Anspruch 4, wobei die zweite Kammer (32) mit einer Ableitungsleitung (37) verbunden ist, die konfiguriert ist, um das in der zweiten Kammer (32) enthaltene Fluid abzuleiten, wobei die Ableitungsleitung (37) mit einem Begrenzer (38) versehen ist, der konfiguriert ist, um das aus der zweiten Kammer (32) ausströmende Fluid zu drosseln und somit den Kolben (33) zu dämpfen, wenn der Gaserzeuger (34) die Gase in die Kammer (31) des Zylinders (30) freisetzt, in welcher er sich befindet.

6. Betätigungsvorrichtung nach Anspruch 4, wobei ein elastisches Element (41) in der zweiten Kammer (32) gegen den Boden (42) des Zylinders (30) derart platziert ist, dass, wenn sich der Kolben (33) und die Stange (33a) von der eingezogenen Position in die ausgefahrene Position verlagern, der Kolben (33) das elastische Element gegen den Boden (42) des Zylinders (30) komprimiert.

7. Betätigungsvorrichtung nach einem der Ansprüche 1 bis 6, wobei der Zylinder (30) ferner eine Ableitungsöffnung (43) umfasst, die konfiguriert ist, um die von dem Gaserzeuger (34) in die Kammer (31) des Zylinders (30), in welcher er sich befindet, freigesetzten Gase abzuleiten, wenn der Kolben (33) und die Stange (33a) in ausgefahrener Position sind.

8. Betätigungsvorrichtung nach Anspruch 7, wobei die Ableitungsöffnung (43) in dem Zylinder (30) derart eingerichtet ist, dass sie von dem Kolben (33) verschlossen ist oder in die zweite Kammer (32) ausmündet, wenn der Kolben (33) in eingezogener Position ist, und die Kammer (31) des Zylinders (30) ausmündet, in welcher sich der Gaserzeuger (34) befindet, wenn der Kolben (33) in ausgefahrener Position ist.

9. System (20), umfassend ein Not-Windrad (21), umfassend einen Mast (24) an einem ersten Ende (24a), von dem sich die Turbine (25) erstreckt, wobei die Turbine (25) an einen Stromerzeuger (27) gekoppelt ist,
wobei das System (20) **dadurch gekennzeichnet ist, dass** es ferner eine Betätigungsvorrichtung nach einem der Ansprüche 1 bis 8 umfasst.

## Claims

1. An actuating device for a system (20) comprising an emergency ram air turbine (21), said device comprising a jack extending along a longitudinal axis and comprising:
- a cylinder (30) configured to be connected to an aircraft structure (23) or to the emergency ram air turbine (21),
- a piston (33) extending inside of the cylinder (30) and defining two chambers (31, 32) therein, the piston (33) being provided with a rod (33a) extending partially outside of the cylinder (30), said portion extending outside of the cylinder (30) being configured to be connected to the emergency ram air turbine (21) or to the aircraft structure (23), the piston (33) being configured to move with respect to the cylinder (30) between a retracted position and a deployed position, in which the length of the portion (33b) of the rod (33a) extending outside of the cylinder (30) is greater than in the retracted position,
said actuating device being **characterized in that** one (31) of the chambers of the cylinder (30) is equipped with at least one gas generator (34) configured to, the piston (33) being in the retracted position, release gases into said chamber (31), so that the piston (33) moves in the cylinder (30) from the retracted position to the deployed position under the influence of a pressure difference between the two chambers (31, 32) of the cylinder (30).

2. The actuating device according to claim 1, wherein the gas generator (34) is a pyrotechnic generator or a hybrid generator.

3. The actuating device according to claim 2, wherein the gas generator (34) is connected to an electrical circuit (35) configured to supply the gas generator (34) with the necessary electrical energy for releasing gases into the chamber (31) of the cylinder (30) in which it is situated, the electrical circuit being provided with a detection system (39) configured to detect a failure of the electrical circuit (35).

4. The actuating device according to any one of claims 1 to 3, wherein the second chamber (32) is provided with an element configured to damp the piston (33) when the gas generator (34) releases gases into the chamber (31) of the cylinder (30) in which it is situated and the piston (33) moves from the retracted position to the deployed position.

5. The actuating device according to claim 4, wherein the second chamber (32) is connected to a discharge duct (37) configured to discharge the fluid contained in the second chamber (32), the discharge duct (37) being provided with a restrictor (38) configured to throttle the fluid discharged from the second chamber (32) and thus to damp the piston (33), when the gas generator (34) releases gases into the chamber (31) of the cylinder (30) in which it is situated.

6. The actuating device according to claim 4, wherein an elastic element (41) is placed in the second chamber (32) against the bottom (42) of the cylinder (30) so that when the piston (33) and the rod (33a) move from the retracted position to the deployed position, the piston (33) compresses the elastic element against the bottom (42) of the cylinder (30).

7. The actuating device according to any one of claims 1 to 6, wherein the cylinder (30) further comprises a discharge opening (43) configured to discharge gases released by the gas generator (34) into the chamber (31) of the cylinder (30) in which it is situated, when the piston (33) and the rod (33a) are in the deployed position.

8. The actuating device according to claim 7, wherein the discharge opening (43) is arranged in the cylinder (30) so as to be obstructed by the piston (33) or to lead into the second chamber (32) when the piston (33) is in the retracted position, and to lead into the chamber (31) of the cylinder (30) in which the gas generator (34) is situated when the piston (33) is in the deployed position.

9. A system (20) comprising an emergency ram air turbine (21) comprising a mast (24) at a first end (24a) of which a turbine (25) extends, said turbine (25) being coupled to an electric generator (27),
the system (20) being **characterized in that** it further comprises an actuating device according to one of claims 1 to 8.
